# EUROPEAN PATENT APPLICATION

(11) **EP 1 479 429 A1**
(43) Date of publication of application: **24.11.2004**
(21) Application number: 04012150.1
(22) Date of filing: 21.05.2004
(51) Int. Cl.: B01D 53/79, F01N 3/04, B01D 47/02, B01D 53/92

(54) **Filtering system**

(30) Priority: 22.05.2003 IT MO20030149
(71) Applicant: SOLA ENZO E C.-S.N.C., 41100 Modena (IT)
(72) Inventor: Sola, Enzo, 41100 Modena (IT)
(74) Representative: Luppi, Luigi

(57) **Abstract**

A depurating system (1) for exhaust fumes of motor vehicles is characterised in that it comprises liquid means arranged in such a way as to wash said exhaust fumes.

## Description

The invention relates to a filtering system, in particular a filtering system for motor vehicles.

Following the combustion of fuel in the engine of motor vehicles, fumes are produced that are discharged into the atmosphere.

Such fumes, as they contain unburnt substances and combustion products, are highly polluting and must therefore be purified, however, they can only be partially depurated by means of catalytic mufflers associated with the motor vehicles.

Most of the substances in the fumes, in particular dusts, nevertheless escape the interception of the catalytic mufflers and are therefore released into the atmosphere.

This causes enormous pollution problems caused by motor vehicles and involves preventing motor vehicle traffic in order to limit such pollution.

An object of the present invention is to provide an effective system for depurating the exhaust fumes of motor vehicles.

An other object is to provide a system for depurating exhaust fumes of motor vehicles that is particularly suitable for reducing dusts contained in such exhaust fumes.

According to the invention, a system for depurating the exhaust fumes of a motor vehicle is provided, characterized in that it comprises liquid means arranged in such a way as to wash said exhaust fumes.

Owing to the invention, it is possible to reduce the polluting substances and the dusts contained in the exhaust fumes of a motor vehicle and prevent their being discharged into the atmosphere.

In this way it is possible, following the application of such a depurating system to a normal motor vehicle, to obtain a motor vehicle that discharges into the atmosphere exhaust fumes having a greatly reduced amount of polluting substances.

The invention may be better understood and implemented with reference to the attached drawing that illustrates an embodiment thereof by way of non-limiting example in which:

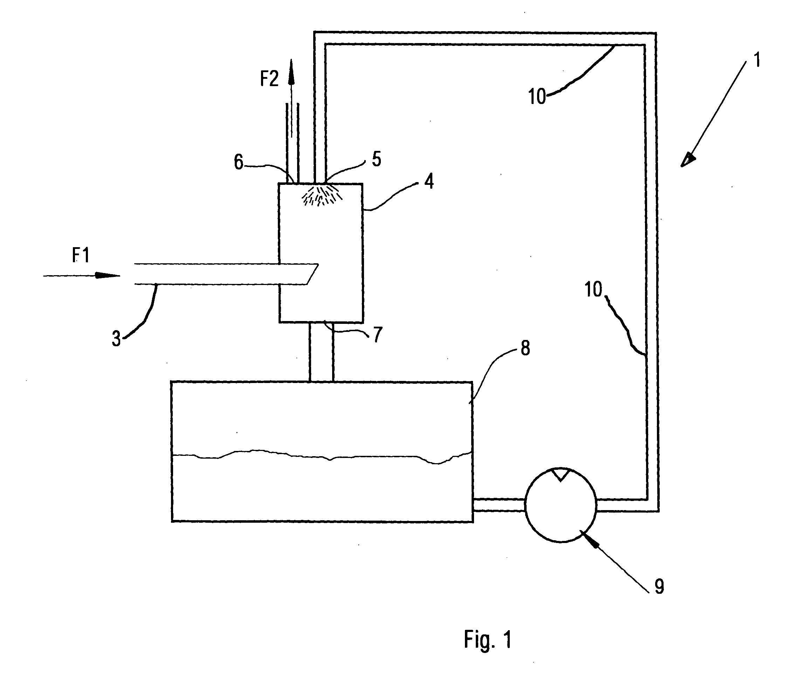

Figure 1 is a schematic view of a system for depurating exhaust fumes of a motor vehicle.

With reference to Figure 1, a depurating system 1 is presented for depurating exhaust fumes produced by a motor vehicle.

The exhaust fumes produced by the combustion of the engine of the motor vehicle are conveyed to a muffler 3 and are made to flow in the direction indicated by the first arrow F1.

From the muffler 3, the exhaust fumes are placed in a depurating chamber 4, instead of being discharged directly into the atmosphere.

Into the depurating chamber 4 are introduced the exhaust fumes coming from the muffler 3 and a depurating liquid, preferably water, arranged to wash the exhaust fumes in such a way as to cause separation of fumes of dusts and unburnt matter contained therein.

The depurating liquid is supplied to the depurating chamber 4 by means of a suitable supply orifice 5 shaped in such a way as to distribute the flow of the depurating liquid i.e. in such a way that the depurating liquid is supplied in the form of a shower.

In this way, contact between the depurating liquid and the exhaust fumes is maximised and the depurating capacity of the depurating liquid is enhanced.

The depurated exhaust fumes emerge from the depurating chamber 4 through a first outlet 6 and are discharged into the atmosphere, as indicated by the further arrow F2, whilst the depurating liquid containing the polluting substances of the exhaust fumes flows out of the depurating chamber 4 from a further outlet 7 and is collected in a collection chamber 8.

From the collection chamber 8 the depurating liquid is taken up by a pump 9 and through suitable conduits 10 it is again placed in the depurating chamber 4.

In this way, the depurating liquid washes the exhaust fumes in the depurating chamber 4 capturing all the heavy substances, dusts and ashes thereof contained therein, in this way, the exhaust fumes, free from polluting substances, can be serenely released into the atmosphere.

The conformation of the depurating system 1, as seen enables the depurating liquid to be used for multiple depurating cycles, thereby limiting waste thereof.

## Claims

1. Depurating system (1) for exhaust fumes of motor vehicles, **characterised in that** it comprises liquid means arranged in such a way as to wash said exhaust fumes.

2. Depurating system according to claim 1 and furthermore comprising depurating chamber means (4) for depurating said exhaust fumes.

3. Depurating system according to claim 2, and furthermore comprising conveying means (3) for conveying said exhaust fumes to said depurating chamber means (4).

4. Depurating system according to claim 2, or 3, and furthermore comprising further conveying means (5, 10) arranged to introduce said liquid means into said depurating chamber means (4).

5. Depurating system according to claim 4, wherein said further conveying means (5, 10) comprises orifice means (5) shaped in such a way as to distribute the flow of said liquid means.

6. Depurating system according to any one of claims 2 to 5, and furthermore comprising outlet means (6) arranged to enable the outflow of said exhaust fumes from said depurating chamber means (4).

7. Depurating system according to any one of claims 2 to 6, and furthermore comprising further outlet means (7) arranged to enable the outflow of said liquid means from said depurating chamber means (4).

8. Depurating system according to any preceding claim, and furthermore comprising collecting means (8) arranged to collect said liquid means.

9. Depurating system according to any preceding claim, and furthermore comprising pump means (9) arranged to move said liquid means.
